**Europäisches Patentamt**

**European Patent Office**

**Office européen des brevets**

(11) Veröffentlichungsnummer: **0 307 644 B1**

## (12) EUROPÄISCHE PATENTSCHRIFT

(45) Veröffentlichungstag der Patentschrift: **19.11.92**

(21) Anmeldenummer: **88113465.4**

(22) Anmeldetag: **19.08.88**

(51) Int. Cl.⁵: **G01P 3/50**

---

(54) **Verfahren und Vorrichtung zur Ermittlung der Garngeschwindigkeit an Textilmaschinen.**

---

(30) Priorität: **01.09.87 CH 3348/87**

(43) Veröffentlichungstag der Anmeldung:
**22.03.89 Patentblatt 89/12**

(45) Bekanntmachung des Hinweises auf die
Patenterteilung:
**19.11.92 Patentblatt 92/47**

(84) Benannte Vertragsstaaten:
**AT BE DE ES FR GB GR IT LU NL SE**

(56) Entgegenhaltungen:
**DE-A- 2 918 740**
**US-A- 3 389 867**

**PATENT ABSTRACTS OF JAPAN, Band 6, Nr.
104 (P-122)[982], 15. Juni 1982; & JP-A-57 35
758 (TOKYO SHIBAURA DENKI) 26-02-1982**

(73) Patentinhaber: **ZELLWEGER USTER AG**
**Wilstrasse 11**
**CH-8610 Uster(CH)**

(72) Erfinder: **Aeppli, Kurt**
**Hägetstalstrasse 15**
**CH-8610 Uster(CH)**

EP 0 307 644 B1

## Beschreibung

Die Erfindung betrifft ein Verfahren zur Ermittlung der Garngeschwindigkeit an Textilmaschinen, auf welchen das Garn mittels einer angetriebenen Nutentrommel auf eine mit dieser antriebsmässig gekoppelte Kreuzspule aufgewickelt wird, durch Bestimmung der Umfangsgeschwindigkeit eines mit der Geschwindigkeit des laufenden Garns synchron umlaufenden Organs durch einen ersten Sensor.

In der CH-A-636 323 ist ein Verfahren dieser Art beschrieben, bei welchem mittels eines Impulsgebers die Umfangsgeschwindigkeit des genannten Organs und damit die Garngeschwindigkeit gemessen wird. Die derart gemessene Garngeschwindigkeit stellt einen Mittelwert dar, der für die Praxis nicht immer ausreichend ist, weil kurzzeitige Schwankungen der Momentangeschwindigkeit die Messung gewisser Garnparameter verfälschen.

Bei stark konischen Kreuzspulen können sich die Wickeldurchmesser an deren grossem und kleinem Ende um mehr als 200% unterscheiden und es ergeben sich, je nachdem, ob auf den grossen oder den kleinen Durchmesser gewickelt wird, momentane Abweichungen der Garngeschwindigkeit der näherungsweise gleichen Grösse. Diese Abweichungen können beispielsweise das Ergebnis der Messung eines Spektrogrammes direkt an einer Spulmaschine unbrauchbar machen oder sie können auch die Messung von Garnparametern, wie beispielsweise der Länge von Dickstellen und Dünnstellen, stark verfälschen.

Durch die Erfindung soll nun dieses bekannte Verfahren dahingehend verbessert werden, dass die momentanen Abweichungen der Garngeschwindigkeit erfasst und bei deren Messung berücksichtigt werden.

Diese Aufgabe wird erfindungsgemäss dadurch gelöst, dass der Kreuzspulendurchmesser und die momentane Lage des Garns auf der Kreuzspule in bezug auf deren Längsachse bestimmt werden, und dass daraus ein Korrekturfaktor zur Ermittlung der momentanen Garngeschwindigkeit aus der aus der Umfangsgeschwindigkeit des rotierenden Organs gewonnenen mittleren Garngeschwindigkeit abgeleitet wird.

Durch das erfindungsgemässe Verfahren kann die Bestimmung der Garngeschwindigkeit an Textilmaschinen, beispielsweise Spulmaschinen, so weit verbessert werden, dass an diesen on-line Spektrogramme gemessen werden können. Ausserdem wird auch die Genauigkeit der Längenmessung von Garnfehlern um ein Vielfaches besser.

Die Erfindung betrifft weiter eine Vorrichtung zur Durchführung des genannten Verfahrens, mit einem ersten Sensor für die Umfangsgeschwindigkeit des rotierenden Organs und mit einem Prozessor für die Auswertung der vom ersten Sensor gelieferten Signale.

Die erfindungsgemässe Vorrichtung ist gekennzeichnet durch einen mit dem Prozessor verbundenen zweiten Sensor zur Bestimmung der momentanen Lage des Garns auf der Kreuzspule und durch Mittel zur Messung oder Berechnung des momentanen Durchmessers der Kreuzspule, wobei der Prozessor so ausgebildet ist, dass aus dem momentanen Durchmesser der Kreuzspule und der momentanen Lage des Garns der Korrekturfaktor abgeleitet, und aus der aus den Signalen des ersten Sensors ermittelten mittleren Garngeschwindigkeit und dem Korrekturfaktor die momentane Garngeschwindigkeit ermittelt wird.

Nachstehend wird die Erfindung anhand eines Ausführungsbeispiels und der Zeichnungen näher erläutert; dabei zeigt:

Fig. 1    eine Prinzipdarstellung eines Ausschnitts einer Textilmaschine mit einer erfindungsgemässen Vorrichtung,

Fig. 2    eine Ansicht in Richtung des Pfeiles II von Fig. 1, und

Fig. 3    ein Blockschaltbild eines mit einer erfindungsgemässen Vorrichtung ausgerüsteten Garnreinigers.

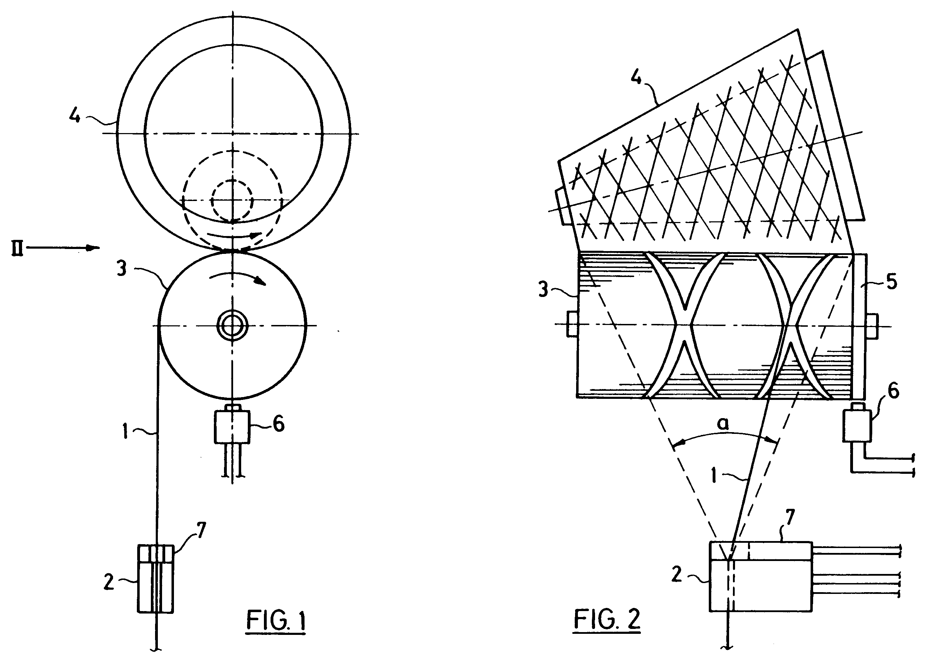

In der schematischen Darstellung der Fig. 1 und 2 sind Teile einer Spulmaschine gezeigt, an der das erfindungsgemässe Verfahren und die entsprechende Vorrichtung mit Vorteil eingesetzt werden. Mit 1 ist ein Faden oder Garn bezeichnet, welches einen Messkopf 2 eines Garnreinigers durchläuft, der in bekannter Weise Fehlerstellen im Garn feststellt und dieses mittels einer eingebauten Schneidvorrichtung durchtrennt, um den Fehler herauszunehmen. Weiter läuft das Garn 1 über eine Nutentrommel 3 und wird auf eine Kreuzspule 4 aufgewickelt. Dabei wird die Nutentrommel 3 angetrieben und die Kreuzspule 4 durch Reibungsschluss mitgedreht. Somit bestimmt die Umfangsgeschwindigkeit der Nutentrommel 3 die Spulgeschwindigkeit des Garns 1 und dessen Durchlaufgeschwindigkeit durch den Messkopf 2.

Die Umfangsgeschwindigkeit der Nutentrommel 3 wird dazu benützt, die Zeitbasis für die Bestimmung der Längen der vom Messkopf 2 detektierten Fehlerstellen abzugeben. Zu diesem Zweck sind auf einem Streifen 5 auf dem Mantel der Nutentrommel 3 Markierungen angebracht, die durch einen ersten Sensor 6 abgetastet und in längengleiche Impulse umgeformt werden. Da diese Markierungen und deren Abtastung nicht Gegenstand der vorliegenden Erfindung bilden, werden sie hier nicht weiter erläutert; es wird in diesem Zusammenhang auf die CH-A-636 323 verwiesen.

Die vom ersten Sensor 6 bei der Abtastung der auf dem Streifen 5 angeordneten Markierungen gelieferten Signale stellen ein Mass für die mittlere Geschwindigkeit des Garns 1 dar, dessen Momentangeschwindigkeit jedoch mit der Garnlage und dem Durchmesser der Kreuzspule 4 variiert. Dabei können sich, je nach Konizität der Kreuzspule 4, die Geschwindigkeiten bei Aufwicklung auf dem grössten und auf dem kleinsten Durchmesser der Kreuzspule 4 wie 3:1 verhalten, wobei dieses Verhältnis auch noch grösser sein kann.

Um nun die effektive Momentangeschwindigkeit des Garns 1 erfassen zu können, ist erfindungsgemäss ein zweiter Sensor 7 zur Messung der Garnlage vorgesehen. Aus der Garnlage und dem momentanen Durchmesser der Kreuzspule 4 lässt sich für eine gegebene Spulmaschine aus einer einmal festgelegten Tabelle ein Korrekturfaktor ableiten, mittels dessen aus der vom ersten Sensor 6 gemessenen mittleren die momentane Garngeschwindigkeit bestimmt werden kann. Dabei gilt: Momentane Garngeschwindigkeit ist gleich mittlere Garngeschwindigkeit mal Korrekturfaktor.

Mit Hilfe der so bestimmten momentanen Garngeschwindigkeit können nicht nur direkt an der Spulmaschine on-line Spektrogramme gemessen werden, sondern es wird auch die Genauigkeit der Längenmessung der vom Messkopf 2 detektierten Garnfehler um ein Vielfaches besser.

Der momentane Durchmesser der Kreuzspule 4 kann entweder durch einen weiteren Sensor direkt oder durch Berechnung aufgrund von definierten Spulenparametern, wie Anfangsdurchmesser, Durchmesser bei voller Spule und Anzahl Umdrehungen der Nutentrommel 3 für eine volle Spule 4 ermittelt werden.

Für den zweiten Sensor 7 sind mehrere Ausführungsformen und Anordnungen möglich: Ausführungsformen: Entweder eine Zeile von Sensoren, beispielsweise eine Photodiodenzeile, über den gesamten Changierweg a des Garns 1, oder ein Sensor, beispielsweise eine Gabellichtschranke, an einem der beiden oder an beiden Umkehrpunkten der Changierbewegung a, in welchen dann das Garn 1 am Umkehrpunkt jeweils eintaucht. Im ersten Fall werden alle Punkte der Garnlage direkt ermittelt; im zweiten Fall werden nur die beiden Endpunkte oder auch nur einer davon gemessen und die übrigen Punkte mit Hilfe der Impulse des ersten Sensors 6 ermittelt, da die Anzahl der Umdrehungen der Nutentrommel 3 zwischen dem aufeinanderfolgenden Eintauchen des Garns 1 in die Gabellichtschranke bekannt ist.

Anordnungen: Zwischen Nutentrommel 3 und Messkopf 2, und zwar entweder nahe am Mantel der Nutentrommel 3, oder, so wie in den Figuren dargestellt, mit dem Messkopf 2 kombiniert, also beispielsweise auf diesen aufgesetzt.

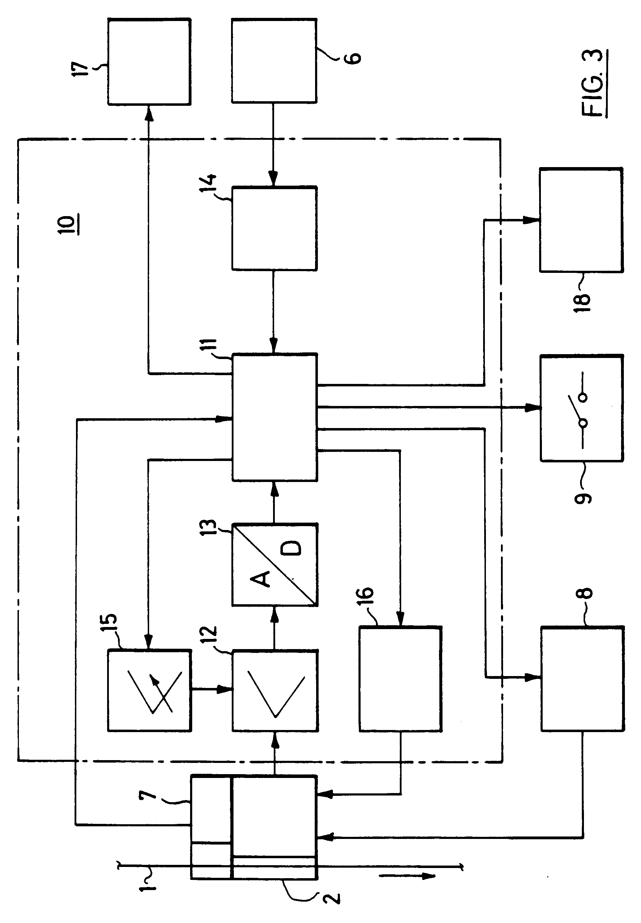

In Fig. 3 ist ein Blockschema eines nach dem beschriebenen Verfahren arbeitenden Garnreinigers dargestellt. Dieser besteht darstellungsgemäss aus dem Messkopf 2, dem schon erwähnten Schneidorgan 8, einer allfälligen Abstellvorrichtung und aus einer elektronischen Verarbeitungs-und Steuerstufe 10, deren Herzstück durch einen Prozessor 11 gebildet ist.

Dem Prozessor 11 sind die vom Messkopf 2 abgegebenen Signale über einen Verstärker 12 und einen Analog/Digitalwandler 13, die vom ersten Sensor 6 an der Nutentrommel 3 (Fig. 1, 2) erzeugten Signale über einen Impulsformer 14 und die vom zweiten Sensor 7 für die Garnlage erzeugten Signale zugeführt.

Im Prozessor 11 werden diese Signale nun so verknüpft, dass einerseits der Querschnittsverlauf des Garns 1 nicht kontinuierlich, das heisst, zeitproportional, sondern in definierten, durch die Teilung der Markierung auf der Nutentrommel gegebenen Abständen, gemessen und ausgewertet wird. Anderseits wird auf die beschriebene Art aus den Signalen der beiden Sensoren 6 und 7 der Momentanwert der Garngeschwindigkeit und daraus die in einem gegebenen Zeitintervall aufgewickelte Garnlänge ermittelt und für die weitere Auswertung herangezogen.

Der Prozessor 11 steuert seinerseits die weiteren Funktionen des Garnreinigers, nämlich über einen Verstärkungsregler 15 die Einstellung auf die Garnnummer, über einen Driftkorrektor 16 allfällige Abwanderungen des Messsignals im Messkopf 2, ferner das Schneidorgan 8 und die allfällige Abstellvorrichtung 9. Ebenso können Steuer- und Ueberwachungssignale auf eine mit 17 bezeichnete Anzeigetafel geleitet werden.

Der Garnreiniger kann auf einfache Weise auch mit einem Fadenwächter 18 ausgerüstet werden. Hierzu werden die Signale des Messkopfes 2 und diejenigen des ersten Sensors 6 im Prozessor so verarbeitet, dass die Abtastwerte des Messignals 11 überwacht werden. Aendern sie sich dauernd zufolge der natürlichen Ungleichmässigkeit des Garns, so bildet dies ein Indiz dafür, dass das Garn durch den Messkopf 2 läuft. Bleiben sie jedoch während einer vorgegebenen Anzahl von Abtastwerten gleich, wird dies dahingehend interpretiert, dass das Garn fehlt oder stillsteht, d.h. gebrochen ist. Der Fadenwächter 18 kann dann entsprechende Schaltfunktionen auslösen.

Eine weitere vorteilhafte Eigenschaft der Erfindung ergibt sich bei Kombination der Signale des Messkopfs 2 und der beiden Sensoren 6 und 7. Fehlt nämlich das Signal des zweiten Sensors 7 innerhalb einer vorgegebenen Anzahl von Impulsen des ersten Sensors 6 trotz sich änderndem Signal des Messkopfes 2, so signalisiert dies den gefürchteten Trommelwickel. Das heisst, dass das Garn in der Nutentrommel gerissen ist und nun auf die Trommel aufgewickelt wird. In diesem Fall muss die Spulstelle möglichst schnell abgestellt und der Fehler durch das Bedienungspersonal behoben werden.

## Patentansprüche

1. Verfahren zur Ermittlung der Garngeschwindigkeit an Textilmaschinen, auf welchen das Garn mittels einer angetriebenen Nutentrommel auf eine mit dieser antriebsmässig gekoppelte Kreuzspule aufgewickelt wird, durch Bestimmung der Umfangsgeschwindigkeit eines mit der Geschwindigkeit des laufenden Garns synchron umlaufenden Organs durch einen ersten Sensor (6), dadurch gekennzeichnet, dass der Kreuzspulendurchmesser und die momentane Lage des Garns (1) auf der Kreuzspule (4) in bezug auf deren Längsachse bestimmt werden, und dass daraus ein Korrekturfaktor zur Ermittlung der momentanen Garngeschwindigkeit aus der aus der Umfangsgeschwindigkeit des rotierenden Organs (3) gewonnenen mittleren Garngeschwindigkeit abgeleitet wird.

2. Verfahren nach Anspruch 1, dadurch gekennzeichnet, dass der momentane Durchmesser der Kreuzspule (4) gemessen wird.

3. Verfahren nach Anspruch 1, dadurch gekennzeichnet, dass der momentane Durchmesser der Kreuzspule (4) aufgrund definierter Spulenparameter, wie Anfangsdurchmesser, Durchmesser bei voller Spule und Anzahl Umdrehungen der Nutentrommel (3) für eine volle Spule, berechnet wird.

4. Verfahren nach einem der Ansprüche 1 bis 3, dadurch gekennzeichnet, dass die momentane Garngeschwindigkeit nach der Formel momentane Garngeschwindigkeit ist gleich Korrekturfaktor mal mittlere Garngeschwindigkeit ermittelt wird.

5. Verfahren nach Anspruch 4, dadurch gekennzeichnet, dass die momentane Lage des Garns (1) auf der Kreuzspule (4) durch einen zweiten Sensor (7) bestimmt wird, dass mittels eines Messkopfs (2) eine Bestimmung des Querschnitts des Garns erfolgt, dass die Signale des Messkopfs und diejenigen des ersten und des zweiten Sensors (6 bzw. 7) daraufhin überprüft werden, ob bei sich änderndem Signal des Messkopfs innerhalb einer vorgegebenen Anzahl von Impulsen des ersten Sensors Signale des zweiten Sensors auftreten, und dass das Nichtauftreten von Signalen des zweiten Sensors als Bruch des Garns in der Nutentrommel (3) interpretiert wird.

6. Vorrichtung zur Durchführung des Verfahrens nach Anspruch 1, mit einem ersten Sensor (6) für die Umfangsgeschwindigkeit des rotierenden Organs und mit einem Prozessor für die Auswertung der vom ersten Sensor gelieferten Signale, gekennzeichnet durch einen mit dem Prozessor (11) verbundenen zweiten Sensor (7) zur Bestimmung der momentanen Lage des Garns (1) auf der Kreuzspule (4) und durch Mittel zur Messung oder Berechnung des momentanen Durchmessers der Kreuzspule, wobei der Prozessor (11) so ausgebildet ist, dass aus dem momentanen Durchmesser der Kreuzspule und der momentanen Lage des Garns der Korrekturfaktor abgeleitet, und aus der aus den Signalen des ersten Sensors ermittelten mittleren Garngeschwindigkeit und dem Korrekturfaktor die momentane Garngeschwindigkeit ermittelt wird.

7. Vorrichtung nach Anspruch 6, dadurch gekennzeichnet, dass der zweite Sensor (7) durch einen an mindestens einem der beiden Umkehrpunkte des Changierwegs (a) des Garns (1) angeordneten Photodetektor, vorzugsweise durch eine Gabellichtschranke, gebildet ist.

8. Vorrichtung nach Anspruch 7, dadurch gekennzeichnet, dass das durch das den Photodetektor kreuzende Garn (1) erzeugte Signal die Basis für die Bestimmung der momentanen Garnlage bildet, deren übrige Positionen anhand der Signale des ersten Sensors (6) ermittelt werden.

9. Vorrichtung nach Anspruch 6, dadurch gekennzeichnet, dass der zweite Sensor (7) durch eine den Changierweg (a) des Garns (1) überdeckende Photozellenreihe gebildet ist.

10. Vorrichtung nach einem der Ansprüche 6 bis 9, mit einem im Garnlauf vor der Nutentrommel angeordneten Messkopf zur Bestimmung des Garnquerschnitts, dadurch gekennzeichnet, dass der zweite Sensor (7) zwischen der Nutentrommel (3) und diesem Messkopf (2) angeordnet ist.

11. Vorrichtung nach Anspruch 10, dadurch gekennzeichnet, dass der zweite Sensor (7) in unmittelbarer Nachbarschaft zur Nutentrommel (3) angeordnet ist.

12. Vorrichtung nach Anspruch 10, dadurch gekennzeichnet, dass der zweite Sensor (7) in unmittelbarer Nachbarschaft zum Messkopf (2) angeordnet ist.

**13.** Vorrichtung nach Anspruch 10, dadurch gekennzeichnet, dass der zweite Sensor (7) mit dem Messkopf (2) zu einer baulichen Einheit zusammengefasst und an diesem montiert ist.

**Claims**

**1.** Process for determining the yarn speed in textile machines, there the yarn is wound by means of a driven grooved drum onto a cross-wound bobbin drive-connected thereto, by determining by means of a first sensor (6) the peripheral speed of an element rotating synchronously at the speed of the continuous yarn, characterized in that the cross-wound bobbin diameter and the instantaneous position of the yarn (1) on the cross-wound bobbin (4) in relation to the bobbin longitudinal axis are determined, and that from said data a correction factor is derived for determining the instantaneous yarn speed from the mean yarn speed obtained from the peripheral speed of the rotating element (3).

**2.** Process according to claim 1, characterized in that the instantaneous diameter of the cross-wound bobbin (4) is measured.

**3.** Process according to claim 1, characterized in that the instantaneous diameter of the cross-wound bobbin (4) is calculated on the basis of defined bobbin parameters such as initial diameter, diameter of full bobbin and number of revolutions of the grooved drum (3) for a full bobbin.

**4.** Process according to one of claims 1 to 3, characterized in that the instantaneous yarn speed is determined using the formula, instantaneous yarn speed equals correction factor times mean yarn speed.

**5.** Process according to claim 4, characterized in that the instantaneous position of the yarn (1) on the cross-wound bobbin (4) is determined by a second sensor (7), that the cross-section of the yarn is determined by means of a measuring head (2), that the signals of the measuring head and the signals of the first and second sensors (6 and 7) are checked to ascertain whether, given a changing signal of the measuring head, signals of the second sensor occur within a predetermined number of pulses of the first sensor, and that the non-occurrence of signals of the second sensor is interpreted as a breakage of the yarn in the grooved drum (3).

**6.** Apparatus for effecting the process according to claim 1, having a first sensor (6) for the peripheral speed of the rotating element and having a processor for evaluating the signals supplied by the first sensor, characterized by a second sensor (7) connected to the processor (11) for determining the instantaneous position of the yarn (1) on the cross-wound bobbin (4) and by means for measuring or calculating the instantaneous diameter of the cross-wound bobbin, with the processor (11) being so designed that the correction factor is derived from the instantaneous diameter of the cross-wound bobbin and the instantaneous position of the yarn, and the instantaneous yarn speed is determined from the mean yarn speed, determined from the signals of the first sensor, and the correction factor.

**7.** Apparatus according to claim 6, characterized in that the second sensor (7) is formed by a photodetector, preferably a forked light barrier, disposed at at least one of the two reversal points of the cross-winding path (a) of the yarn (1).

**8.** Apparatus according to claim 7, characterized in that the signal produced by the yarn (1) crossing the photodetector forms the basis for determining the instantaneous yarn position, the remaining positions being determined with the aid of the signals of the first sensor (6).

**9.** Apparatus according to claim 6, characterized in that the second sensor (7) is formed by a row of photocells covering the cross-winding path (a) of the yarn (1).

**10.** Apparatus according to one of claims 6 to 9, having a measuring head disposed, in yarn running direction, upstream of the grooved drum for determining the yarn cross-section, characterized in that the second sensor (7) is disposed between the grooved drum (3) and said measuring head (2).

**11.** Apparatus according to claim 10, characterized in that the second sensor (7) is disposed in the direct vicinity of the grooved drum (3).

**12.** Apparatus according to claim 10, characterized in that the second sensor (7) is disposed in the direct vicinity of the measuring head (2).

**13.** Apparatus according to claim 10, characterized in that the second sensor (7) is combined with the measuring head (2) to form a structural unit and is mounted on said measuring head.

**Revendications**

1. Procédé pour la détection de la vitesse du fil dans des machines textiles, sur lesquelles le fil est enroulé au moyen d'un tambour ou cylindre rainuré entraîné sur une bobine croisée accouplée à celui-ci pour son entraînement, par la détermination de la vitesse périphérique d'un organe tournant de façon synchrone avec la vitesse du fil courant par un premier capteur (6), caractérisé en ce qu'on détermine le diamètre de la bobine croisée et la position momentanée du fil (1) sur la bobine croisée (4) par rapport à son axe longitudinal et qu'on obtient à partir de ceux-ci un facteur de correction pour déterminer la vitesse instantanée du fil à partir de la vitesse moyenne de fil obtenue à partir de la vitesse périphérique de l'organe tournant (3).

2. Procédé selon la revendication 1, caractérisé en ce qu'on mesure le diamètre instantané de la bobine croisée (4).

3. Procédé selon la revendication 1, caractérisé en ce qu'on calcule le diamètre instantané de la bobine croisée (4) sur la base de paramètres de bobine définis, tels que le diamètre de départ, le diamètre lorsque la bobine est pleine et le nombre de tours du tambour ou cylindre rainuré (3) pour une bobine pleine.

4. Procédé selon l'une des revendications 1 à 3, caractérisé en ce qu'on détermine la vitesse instantanée du fil selon la formule: vitesse instantanée du fil est égale facteur de correction, multiplié par vitesse de fil moyenne.

5. Procédé selon la revendication 4, caractérisé en ce qu'on détermine la position momentanée du fil (1) sur la bobine croisée (4) par un deuxième capteur (7), qu'on détermine au moyen d'une tête de mesure (2) la section transversale du fil, qu'on surveille ensuite les signaux provenant de la tête de mesure et ceux des premier et deuxième capteurs (6, 7) afin de vérifier si, lorsque le signal de la tête de mesure se modifie à l'intérieur d'un nombre d'impulsions prédéfini du premier capteur, des signaux sont produits provenant du deuxième capteur, et que la non-apparition de signaux du deuxième capteur est interprétée comme rupture du fil dans le tambour rainuré (3).

6. Dispositif pour la mise en oeuvre du procédé selon la revendication 1 comprenant un premier capteur (6) pour la vitesse périphérique de l'organe tournant, ainsi qu'un processeur pour l'évaluation des signaux fournis par le premier capteur, caractérisé par un deuxième capteur (7) relié au processeur (11) pour déterminer la position momentanée du fil (1) sur la bobine croisée (4) et par des moyens pour mesurer ou calculer le diamètre instantané de la bobine croisée, le processeur (11) étant réalisé de façon qu'on obtient à partir du diamètre instantané de la bobine croisée et de la position momentanée du fil le facteur de correction, et qu'on détermine à partir de la vitesse moyenne du fil déterminée à partir des signaux du premier capteur, et le facteur de correction, la vitesse instantanée du fil.

7. Dispositif selon la revendication 6, caractérisé en ce que le deuxième capteur (7) est constitué par un photodétecteur, de préférence une barrière lumineuse en forme de fourche, disposée sur au moins un des deux points de renversement du trajet de va-et-vient (a) du fil (1).

8. Dispositif selon la revendication 7, caractérisé en ce que le signal produit par le fil (1) passant à travers le photodétecteur constitue la base pour déterminer la position momentanée du fil, dont les autres positions sont déterminées à l'aide des signaux provenant du premier capteur (6).

9. Dispositif selon la revendication 6, caractérisé en ce que le deuxième capteur (7) est constitué par une ligne de cellules photoélectriques recouvrant le trajet de va-et-vient (a) du fil (1).

10. Dispositif selon l'une des revendications 6 à 9, avec une tête de mesure disposée dans le sens d'avancement du fil devant le tambour rainuré pour le détermination de la section transversale du fil, caractérisé en ce que le deuxième capteur (7) est disposé entre le tambour rainuré (3) et cette tête de mesure (2).

11. Dispositif selon la revendication 10, caractérisé en ce que le deuxième capteur (7) est disposé au voisinage immédiat du tambour rainuré (3).

12. Dispositif selon la revendication 10, caractérisé en ce que le deuxième capteur (7) est disposé au voisinage immédiat de la tête de mesure (2).

13. Dispositif selon la revendication 10, caractérisé en ce que le deuxième capteur (7) est réuni avec la tête de mesure (2) pour former une unité constructive et est monté sur celle-ci.

FIG. 2

FIG. 1

FIG. 3

EP 0 307 644 B1